# EUROPEAN PATENT SPECIFICATION

(11) **EP 1 516 158 B1**
(45) Date of publication and mention of the grant of the patent: **08.08.2007**
(21) Application number: 03757167.6
(22) Date of filing: 04.06.2003
(51) Int. Cl.: G01C 21/34, G08G 1/0968

(54) **ITINERARY SEARCH METHOD**
REISEPLANUNGS-SUCHVERFAHREN
PROCEDE DE RECHERCHE D'ITINERAIRE

(30) Priority: 11.06.2002 FR 0207151
(43) Date of publication of application: 23.03.2005
(73) Proprietor: Koninklijke Philips Electronics N.V., 5621 BA Eindhoven (NL)
(72) Inventor: BEAUFORT, Dominique, F-75008 Paris (FR); FAY, Laurent, F-75008 Paris (FR); SAMSON, Christophe, F-75008 Paris (FR)
(74) Representative: van Oudheusden-Perset, Laure E.
(86) International application number: PCT/IB2003/002464
(87) International publication number: WO 2003/104750

(56) References cited:
- EP-A- 0 785 537
- EP-A- 1 077 362
- EP-A- 1 128 163
- DE-A- 10 005 780

## Description

The invention relates to a system comprising at least a communication network, a user entity and a server entity, in which the user entity transmits requests relating to services to a server entity and receives responses indicating service providers originating from said server entity.

The invention also relates to a server entity intended to be used in such a system.

It also relates to a method of searching service providers, and a program comprising instructions for performing such a method.

International patent application WO 96/36193 describes a system in which a mobile user entity transmits a request relating to a service through a network in order to be guided to a service provider who proposes said service and who is in the proximity of the mobile user entity. EP-A-1 128 163 describes a method of computer-assisted route planning and traveling. The method provides a personalized information-push service that, depending on a particular location or situation, provides a user with information about his or her environment or various points of interest, thereby taking into account personal interests. EP-A-1 077 362 describes a route guiding apparatus that provides information for a route using public transportation as an alternative to a vehicular route.

The invention proposes a different type of system with which service providers can also be found.

A system according to the invention is defined in claim 1, which is appended to the description.

A server entity according to the invention is defined in claim 2, which is appended to the description.

A search method according to the invention is defined in claim 3, which is appended to the description.

According to the invention, an itinerary responding to certain criteria is first computed and subsequently service providers situated in the proximity of the computed itinerary are selected. In other words, the service providers are not searched with respect to the current localization of the user entity, as is the case in the above-mentioned prior art, but with respect to an itinerary which the user entity is going to follow. It is not a matter of moving about for the purpose of accessing a service but of benefiting from moving about so as to access a service.

The itinerary search criteria are, for example, a point of departure and a point of arrival, or the current localization of the user entity and a point of arrival. A transport mode (on foot, by car, by bus, by metro ...) may also be defined.

When a transport mode is defined as the itinerary search criterion, said proximity condition is adapted as a function of said mode transport. For example, the service provider may be nearer to the computed itinerary if the user moves about on foot rather than by car. Similarly, the service provider may be near a bus or metro station when the user moves about by bus or metro.

Advantageously, said proximity condition is also adapted to the types of zones traversed by the itinerary. For example, in a part of the itinerary situated in a country zone, the service provider may be further away than in a part of the itinerary situated in town.

These and other aspects of the invention are apparent from and will be elucidated, by way of non-limitative example, with reference to the embodiment(s) described hereinafter.

In the drawings:
Fig. 1 is a diagram of a first example of the system according to the invention;
Fig. 2 is a diagram of a second example of the system according to the invention;
Fig. 3 is a diagram showing steps of an itinerary search method according to the invention;
Fig. 4 is a diagram elucidating the mode of determining service providers fulfilling the proximity condition.

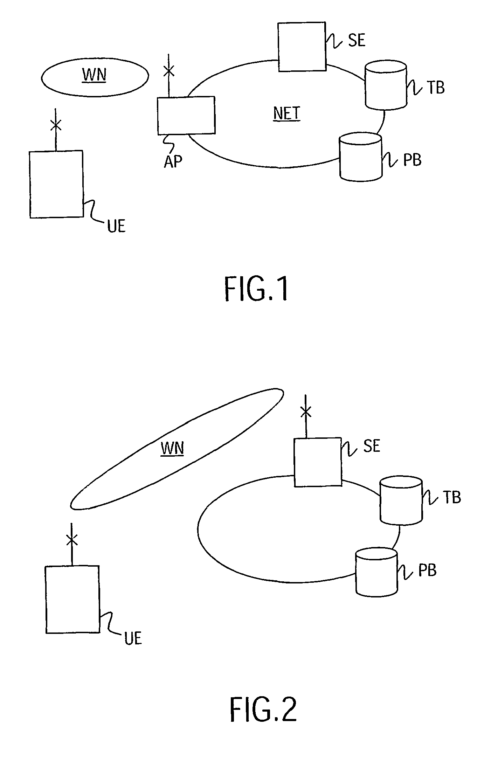

Fig. 1 shows an example of the system according to the invention, which comprises a user entity UE, a communication network NET, a server entity SE, a transport database TB and a service provider database PB. The server entity SE has access to the databases TB and PB via the communication network NET. The user entity UE is a mobile entity provided with radio communication means. It has access to the communication network NET via a radio access point AP.

In Fig. 2, the mobile user entity UE has direct access to the server entity SE via a radio connection without passing through the communication network NET.

In the embodiments shown in Figs. 1 and 2, the transport database TB and the service provider database PB are distinct from the server entity SE. This is not limitative. One of the databases (or the two databases) may be locally stored at the level of the server entity SE.

For example, the communication network NET is the Internet and the communications by radio take place via a radio communication network WN in conformity with the GPRS or the UMTS standard.

In another embodiment (not shown) the user entity UE is a fixed entity connected to the Internet via a telephone line and a modem, or via a high-rate digital line. For example, it may be an automat put at the disposal of the public, or a personal computer.

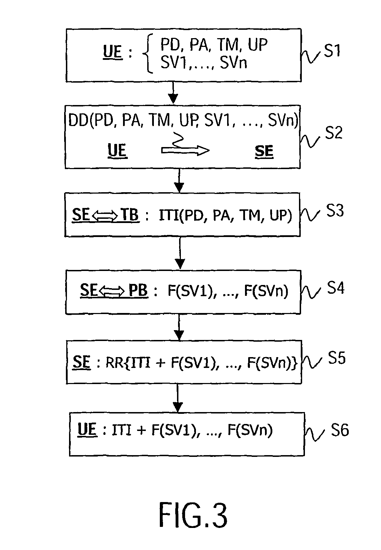

Fig. 3 shows an example of the itinerary search method according to the invention, comprising 6 steps enumerated S1 to S6.

In step S1, a user defines at least one itinerary search criterion, as well as several services SV1, ... SVn which he wishes to access.

In a first embodiment, the user takes a point of departure PD and a point of arrival PA. In a second embodiment, the user entity UE is provided with means for determining its current position (for example, a device of the GPS type, or means for triangularization) and this current position constitutes the point of departure for the itinerary search.

Advantageously, the user also has the possibility of indicating a transport mode TM to be used, and/or a user preference UP intended to determine an optimal itinerary from various possible itineraries (for example, the user may choose time, distance, or costs as optimal criteria).

In a first variant of the invention, to define a service, the user orally or manually takes one or several words, for example, names of products or activities (bread, baker, doctor, hospital, bank, supermarket ...). In accordance with a second variant, he selects words from a predefined list.

Advantageously, the services may be defined at any instant by the user, independent of sending an itinerary search request. In this case, they are stored in a current list. When an itinerary search request is sent, the services in the current list are inserted in the request. The user can delete a service from the current list at any instant.

In step S2, a request DD is sent to the server entity SE. This request comprises at least one itinerary search criterion and one service. The itinerary search criterion comprises at least a point of departure PD and a point of arrival PA. Optionally, it also comprises a transport mode TM, and/or a user preference UP.

In step S3, the server entity SE computes an itinerary ITI from the search criterion or criteria comprised in the request (PD, PA, TM, UP). This computation is made by using the transport database TB. There are currently sites on the Internet that propose computations of itineraries from criteria defined by a user. This is, for example, the case with the site www.viamichelin.fr. For example, a computation mode which is similar to that used on these sites is used.

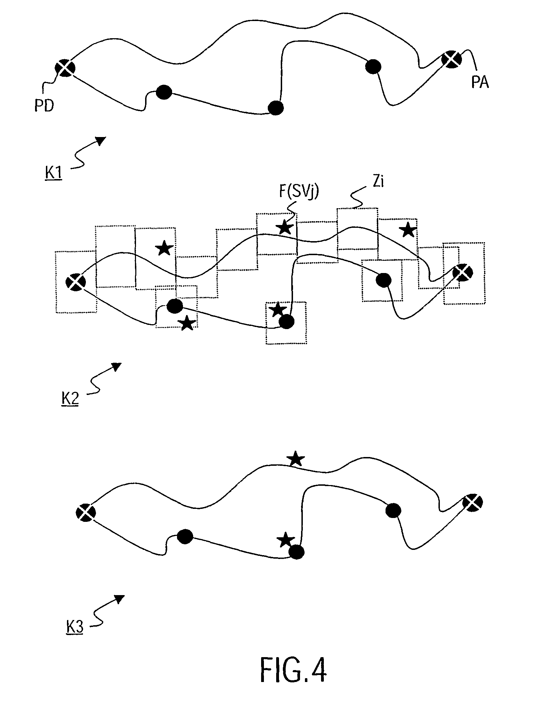

In step S4, the server entity SE selects for each service SVj (j = 1,..., n) indicated in the itinerary search request, a provider F(SVj) who provides said service and fulfills a proximity condition with respect to the itinerary computed in step S3 by using the service provider database PB. Advantageously, the proximity condition is adapted as a function of said transport mode, and/or as a function of the types of traversed zones. An example of the provider selection mode will be described in detail hereinafter with reference to Fig. 4.

In step S5, the server entity SE elaborates a response RR which comprises the computed itinerary ITI with localization of the selected providers F(SVj). For example, the response consists of an electronic page comprising a graphical representation of the itinerary on which the providers are localized, and/or a list of stages and directions to be followed, in which the providers are mentioned at the appropriate stage.

In step S6, the user entity UE receives the response and presents it to the user. When the response has the form of an electronic page, it is displayed on a screen of the user entity UE. When the user entity UE is an automat at the disposal of the public, the response is advantageously printed in order that the user can take it with him.

Fig. 4 shows three series of two curves to explain the operation of the itinerary search method according to the invention.

In each series of curves, the high curve corresponds to the itinerary computed for transport by car and the low curve corresponds to the computed itinerary by using public transport. On the low curves, the stations at which the user may interrupt his journey are indicated by dots. The first series of curves K1 represents the itineraries computed in step S3. The second series of curves K2 represents an example of the mode of selecting a service provider, as performed in step S4. The third series of curves K3 represents the response elaborated in step S5.

The providers are selected, for example, in the following way. The service providers are stored in the service provider database PB per geographical zone. The geographical zones may have an arbitrary form. In Fig. 4, it is assumed that the geographical zones are rectangular. Each geographical zone is characterized by geographical co-ordinates.

As indicated in the second series of curves K2, the server entity defines rectangular search zones Zi along the computed itinerary, such that each search zone is approximately centered on the itinerary. As indicated on the low curves, when the itinerary has been computed by means of a public transport mode, the search zones are not defined around stations. The search zones are more or less large in accordance with the used transport mode and in accordance with the type of traversed geographical zone.

Advantageously, the user has the possibility to define a maximum distance between the services to be found and the computed trajectory. In this embodiment, the width of the search zones depends on this maximum distance defined by the user.

The server entity SE subsequently searches in the provider database PB whether there are providers who provide the service or services requested in the search zones thus defined.

As long as all the search zones have not been explored, the providers found are registered in the memory. In the second series of curves K2, the providers found are indicated by asterisks.

In a first example, when all the search zones have been explored, the server entity SE makes a selection from the providers which have been found. For example, for each service, one or several providers that are closest to the itinerary are selected. If several services have been requested, the providers are selected as a function of regrouping facilities.

In a second example, no selection is made. All the providers found are localized in the itinerary.

The third series of curves K3 only represents the selected providers.

Advantageously, an itinerary search method according to the invention is implemented in the form of a first program intended to be executed at the level of the user entity UE, and a second program intended to be executed at the level of the server entity SE.

The invention is not limited to the embodiments described by way of example. Modifications or improvements may be made for the system, the server entity, and the itinerary search method which have been described hereinbefore without departing from the scope of the invention.

Use of the verb "comprise" and its conjugations does not exclude the presence of elements or steps other than those stated in the claims.

## Claims

1. A system for computing an itinerary comprising at least a communication network, a user entity and a server entity, said user entity comprising:
- means for defining at least one itinerary search criterion and at least one service;
- means for sending an itinerary search request to said server entity via said communication network, said request comprising at least said search criterion and said service;
- means for receiving a response via said communication network;
- means for presenting said response,
said server entity comprising:
- means for receiving said itinerary search request;
- means for computing at least one itinerary from said search criterion by using a transport database, the computed itinerary traversing one or several zones each being of a certain type;
- means for selecting at least one provider providing said service and fulfilling at least one proximity condition with respect to the computed itinerary by using a database of service providers, said proximity condition being adapted as a function of at least one of the following parameters: a transport mode, which has been defined as an itinerary search criterion, and the type of traversed zones;
- means for sending, to said user entity via said communication network, a response comprising the computed itinerary with localization of the selected provider.

2. A server entity for computing an itinerary comprising:
- means for receiving an itinerary search request, said request comprising at least one search criterion and at least one service;
- means for computing at least one itinerary from said search criterion by using a transport database, the computed itinerary traversing one or several zones each being of a certain type;
- means for selecting at least one provider providing said service and fulfilling at least one proximity condition with respect to the computed itinerary by using a database of service providers, said proximity condition being adapted as a function of at least one of the following parameters: a transport mode, which has been defined as an itinerary search criterion, and the type of traversed zones;
- means for sending a response comprising the computed itinerary with localization of the selected provider.

3. An itinerary search method comprising the steps of:
- defining at least one itinerary search criterion and at least one service;
- computing at least one itinerary responding to said search criterion by using a transport database, the computed itinerary traversing one or several zones each being of a certain type;
- selecting at least one provider providing said service which fulfills a proximity condition with respect to the computed itinerary by using a database of service providers, said proximity condition being adapted as a function of at least one of the following parameters: a transport mode, which has been defined as an itinerary search criterion, and the type of traversed zones;
- presenting the computed itinerary with localization of the selected provider.

4. An itinerary search method as claimed in claim 3, **characterized in that** the service can be defined independently of the definition of the at least one itinerary search criterion, and **in that** the services defined are stored in a current list intended to be used during the itinerary computation.

5. A program comprising instructions for performing when it is executed by a processor, an itinerary search method comprising the steps of:
- defining at least one itinerary search criterion and at least one service;
- computing at least one itinerary responding to said search criterion by using a transport database, the computed itinerary traversing one or several zones each being of a certain type;
- selecting at least one provider providing said service which fulfills a proximity condition with respect to the computed itinerary by using a database of service providers, said proximity condition being adapted as a function of at least one of the following parameters: a transport mode, which has been defined as an itinerary search criterion, and the type of traversed zones;
- presenting the computed itinerary with localization of the selected provider.

## Patentansprüche

1. System zum Berechnen eines Reiseplans mit wenigstens einem Kommunikationsnetzwerk, einer Benutzerentität und einer Serverentität, wobei die genannte Benutzerentität Folgendes umfasst:
- Mittel zum Definieren wenigstens eines Reiseplanungssuchkriteriums und wenigstens eines Funkdienstes,
- Mittel zum Senden eines Reiseplanungssuchantrags zu der genannten Serverentität über das genannte Kommunikationsnetzwerk, wobei der genannte Antrag wenigstens das genannte Suchkriterium und den genannten Funkdienst aufweist,
- Mittel zum Empfangen einer Antwort über das genannte Kommunikationsnetzwerk,
- Mittel zum Präsentieren der genannten Antwort,
wobei die genannte Serverentität Folgendes umfasst:
- Mittel zum Empfangen des genannten Reiseplanungssuchantrags,
- Mittel zum Berechnen wenigstens eines Reiseplans aus dem genannten Suchkriterium durch Verwendung einer Transportdatenbank, wobei die berechnete Reiseplanung durch eine oder verschiedene Zonen geht, die je von einem bestimmten Typ sind,
- Mittel zum Selektieren wenigstens eines Providers, der den genannten Funkdienst liefert und wenigstens eine Annäherungsbedingung gegenüber der berechneten Reiseplanung erfüllt durch Verwendung einer Datenbank von Dienstprovidern, wobei die genannte Annäherungsbedingung als eine Funktion von wenigstens einem der nachfolgenden Parametern angepasst ist: eine Transportmode, die als ein Reiseplanungssuchkriterium definiert worden ist, und den Typ durchquerter Zonen;
- Mittel zum Aussenden einer Antwort zu der genannten Benutzerentität, und zwar über das genannte Kommunikationsnetzwerk, wobei die Antwort die berechnete Reiseplanung mit Ortung des selektierten Providers umfasst.

2. Serverentität zum berechnen einer Reiseplanung, die Folgendes umfasst:
- Mittel zum Empfangen eines Reiseplanungssuchantrags, wobei der genannte Antrag wenigstens ein Suchkriterium und wenigstens einen Dienst aufweist;
- Mittel zum Berechnen wenigstens einer Reiseplanung aus dem genannten Suchkriterium durch Verwendung einer Transportdatenbank, wobei die berechnete Reiseplanung eine oder verschiedene Zonen durchquert, die je von einem bestimmten Typ sind;
- Mittel zum Selektieren wenigstens eines Providers, der den genannten Dienst liefert und wenigstens eine Annäherungsbedingung in Bezug auf die berechnete Reiseplanung durch Verwendung einer Datenbank des Dienstproviders, wobei die genannte Annäherungsbedingung als eine Funktion von wenigstens einem der nachfolgenden Parameter angepasst ist: eine Transportmode, die als ein Reiseplanungssuchkriterium definiert worden ist, und den Typ durchquerter Zonen;
- Mittel zum Aussenden einer Antwort ,Informationsträger der berechneten Reiseplanung mit Ortung des selektierten Providers.

3. Reiseplanungssuchverfahren, das die nachfolgenden Verfahrensschritte umfasst:
- das Definieren wenigstens eines Reiseplanungssuchkriteriums und wenigstens eines Funkdienstes,
- das Berechnen wenigstens eines Reiseplans in Antwort auf das genannte Suchkriterium durch Verwendung einer Transportdatenbank, wobei der berechnete Reiseplan eine oder verschiedene Zonen durchquert, die je von einem bestimmten Typ sind;
- das Selektieren wenigstens eines Providers, der den genannten Dienst liefert, der eine Annäherungsbedingung in Bezug auf den berechneten Reiseplan erfüllt, und zwar durch Verwendung einer Datenbank von Dienstprovidern, wobei die genannte Annäherungsbedingung als eine Funktion wenigstens eines der nachfolgenden Parameter vorgesehen ist: eine Transportmode, die als ein Reisesuchkriterium definiert worden ist, und den Typ durchquerter Zonen,
- das Präsentieren des berechneten Reiseplans mit Ortung des selektierten Providers.

4. Reiseplanungssuchverfahren nach Anspruch 3, **dadurch gekennzeichnet, dass** der Dienst unabhängig von der Definition des wenigstens einen Reiseplanungssuchkriteriums definiert werden kann, und dass die definierten Dienste in einer aktuellen Liste gespeichert werden, die während der Reiseplanberechnung verwendet werden soll.

5. Programm mit Instruktionen zum Durchführen eines Reiseplanungssuchverfahrens, wenn von einem Prozessor durchgeführt, wobei das Verfahren die nachfolgenden Verfahrensschritte umfasst:
- das Definieren wenigstens eines Reiseplanungssuchkriteriums und wenigstens eines Dienstes,
- das Berechnen wenigstens einer Reiseplanung in Reaktion auf das genannte Suchkriterium durch Verwendung einer Transportdatenbank, wobei der berechnete Reiseplan durch eine oder verschiedene Zonen geht, die je von einem anderen Typ sind,
- das Selektieren wenigstens eines Providers, der den genannten Dienst liefert, der eine Annäherungsbedingung in Bezug auf die berechnete Reiseplanung durch Verwendung einer Datenbank von Dienstprovidern erfüllt,
wobei die genannte Annäherungsbedingung als eine Funktion wenigstens eines der nachfolgenden Parameter vorgesehen ist: eine Transportmode, die als ein Reiseplanungssuchkriterium definiert worden ist, und den Typ durchquerter Zonen,
- das Präsentieren der berechneten Reiseplanung mit Ortung des selektierten Providers.

## Revendications

1. Système pour calculer un itinéraire comprenant au moins un réseau de communication, une entité utilisateur et une entité serveur, ladite entité utilisateur comprenant :
- des moyens pour définir au moins un critère de recherche d'itinéraire et au moins un service ;
- des moyens pour envoyer une demande de recherche d'itinéraire à ladite entité serveur par le biais dudit réseau de communication, ladite demande comprenant au moins ledit critère de recherche et ledit service ;
- des moyens pour recevoir une réponse par le biais dudit réseau de communication ;
- des moyens pour présenter ladite réponse ;
ladite entité serveur comprenant :
- des moyens pour recevoir ladite demande de recherche d'itinéraire ;
- des moyens pour calculer au moins un itinéraire à partir dudit critère de recherche en utilisant une base de données de transport, l'itinéraire calculé traversant une ou plusieurs zones qui sont chacune d'un certain type ;
- des moyens pour sélectionner au moins un fournisseur proposant ledit service et remplissant au moins une condition de proximité par rapport à l'itinéraire calculé en utilisant une base de données de fournisseurs de service, ladite condition de proximité étant adaptée en fonction d'au moins un des paramètres suivants : un mode de transport, qui a été défini comme critère de recherche d'itinéraire, et le type de zones traversées ;
- des moyens pour envoyer, à ladite entité utilisateur par le biais dudit réseau de communication, une réponse comprenant l'itinéraire calculé avec la localisation du fournisseur sélectionné.

2. Entité serveur pour calculer un itinéraire comprenant:
- des moyens pour recevoir une demande de recherche d'itinéraire, ladite demande comprenant au moins un critère de recherche et au moins un service ;
- des moyens pour calculer au moins un itinéraire à partir dudit critère de recherche en utilisant une base de données de transport, l'itinéraire calculé traversant une ou plusieurs zones qui sont chacune d'un certain type ;
- des moyens pour sélectionner au moins un fournisseur proposant ledit service et remplissant au moins une condition de proximité par rapport à l'itinéraire calculé en utilisant une base de données de fournisseurs de service, ladite condition de proximité étant adaptée en fonction d'au moins un des paramètres suivants : un mode de transport, qui a été défini comme critère de recherche d'itinéraire, et le type de zones traversées ;
- des moyens pour envoyer une réponse comprenant l'itinéraire calculé avec la localisation du fournisseur sélectionné.

3. Procédé de recherche d'itinéraire comprenant les étapes suivantes :
- la définition d'au moins un critère de recherche d'itinéraire et au moins un service ;
- le calcul d'au moins un itinéraire répondant audit critère de recherche en utilisant une base de données de transport, l'itinéraire calculé traversant une ou plusieurs zones qui sont chacune d'un certain type ;
- la sélection d'au moins un fournisseur proposant ledit service qui remplit une condition de proximité par rapport à l'itinéraire calculé en utilisant une base de données de fournisseurs de service, ladite condition de proximité étant adaptée en fonction d'au moins un des paramètres suivants : un mode de transport, qui a été défini comme critère de recherche d'itinéraire, et le type de zones traversées ;
- la présentation de l'itinéraire calculé avec la localisation du fournisseur sélectionné.

4. Procédé de recherche d'itinéraire suivant la revendication 3, **caractérisé en ce que** le service peut être défini indépendamment de la définition du au moins un critère de recherche d'itinéraire, et **en ce que** les services définis sont stockés dans une liste à jour destinée à être utilisée lors du calcul de l'itinéraire.

5. Programme comprenant des instructions pour exécuter, lorsqu'il est exécuté par un processeur, un procédé de recherche d'itinéraire comprenant les étapes suivantes :
- la définition d'au moins un critère de recherche d'itinéraire et au moins un service ;
- le calcul d'au moins un itinéraire répondant audit critère de recherche en utilisant une base de données de transport, l'itinéraire calculé traversant une ou plusieurs zones qui sont chacune d'un certain type ;
- la sélection d'au moins un fournisseur proposant ledit service qui remplit une condition de proximité par rapport à l'itinéraire calculé en utilisant une base de données de fournisseurs de service, ladite condition de proximité étant adaptée en fonction d'au moins un des paramètres suivants : un mode de transport, qui a été défini comme critère de recherche d'itinéraire, et le type de zones traversées ;
- la présentation de l'itinéraire calculé avec la localisation du fournisseur sélectionné.
